# EUROPEAN PATENT SPECIFICATION

(11) **EP 0 487 764 B1**
(45) Date of publication and mention of the grant of the patent: **08.06.1994**
(21) Application number: 90122645.6
(22) Date of filing: 27.11.1990
(51) Int. Cl.: B62M 17/00

(54) **A direct transmission system for a bicycle**
Fahrrad mit Wellenantrieb
Transmission directe pour bicyclette

(43) Date of publication of application: 03.06.1992
(73) Proprietor: TA CHANG LAY INTERNATIONAL BUSINESS CO., LTD., Ta Te Li, Pei Tun Dist., Taichung (TW)
(72) Inventor: Lee, Wei, Taichung (TW); Lai, Ta-chi, Taichung (TW)
(74) Representative: Casalonga, Axel

(56) References cited:
- EP-A- 0 105 949
- GB-A- 362 367
- US-A- 3 861 715

## Description

The invention relates to a transmission system, for a bicycle as defined in the pre-characterizing part of Claim 1; such a transmission is disclosed in US-A-3 861 715.

The rear axle of the bicycle is rigidly fixed and can not be easily removed. This is very inconvenient when the bicycle has a flat tire and when the rear wheel has to be removed so as to repair the flat tire.

The objective of the invention is to provide a direct transmission system for a bicycle or the like, in which the rear wheel axle of the bicycle can be stably fixed to the lower rear fork and can be easily removed without detaching the box for housing the direct transmission system.

The other objective of the invention is to provide a direct transmission system for a bicycle, in which the shaft of the bicycle can be stably supported to move rotationally only and can not move longitudinally.
FIG. 1 is a partial top plane view of a direct transmission system;
FIG. 2 is a partial cross sectional view illustrating an end portion of the direct transmission system; and
FIG. 3 is an exploded view of a box for housing the rear end portion of the direct transmission system.

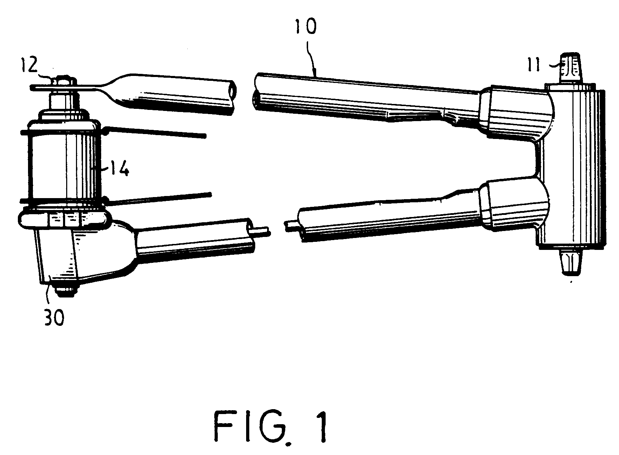

Referring to FIG. 1, a direct transmission system is provided for a bicycle. The bicycle has a front axle 11 rotatably supported on a front end of a frame 10 and a rear axle 12 fixed to a rear end of the frame 10. A hub 14 is rotatably coupled on the rear axle 12. A box 30 is fixed on one side of the rear axle 12 for housing the direct transmission system.

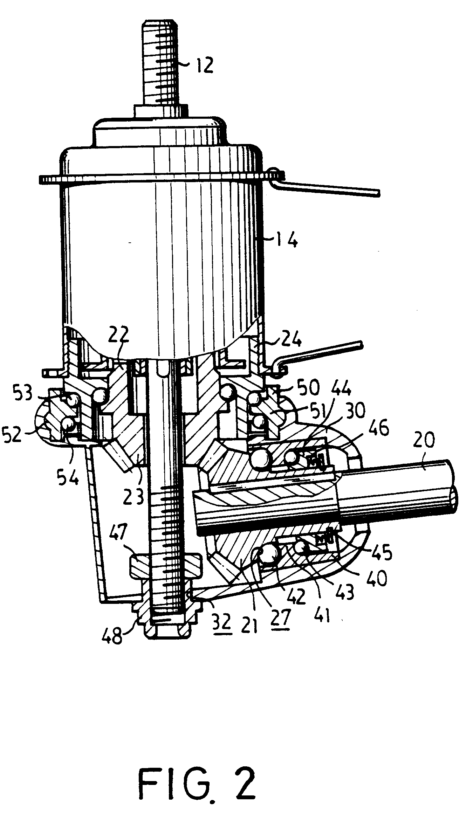

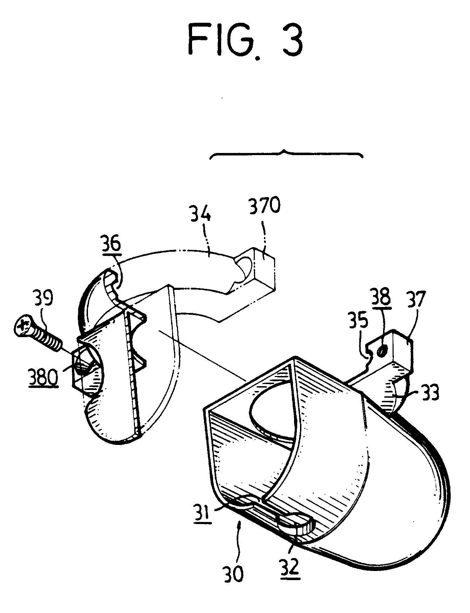

Referring next to FIGS. 2 and 3, a rear end of a shaft 20 extends into the box 30. A conical gear portion 21 is formed on the rear end of the shaft 20. A mobile cone 22 which is rotatably provided around the rear axle 12 has a conical gear portion 23 formed on the right end portion for engagement with the conical gear portion 21 of the shaft 20. The hub 14 is driven to rotate by the mobile cone 22 which is driven by the shaft 20 via the engagement between the conical gear portions 21, 23. How can the hub 14 be caused to rotate is well known in the art and will not be described in further details.

As shown in FIG. 2, a sleeve 40 is force-fitted within the box 30. An annular flange 41 is formed in the inner surface of the sleeve 40. A ball bearing 42, 43 is provided on each side of the annular flange 41. The conical gear portion 21 has a larger diameter than that of the shaft 20 so that a shoulder 27 is formed behind the conical gear portion 21. The ball bearing 42 is rotatably received between the shoulder 27 and the annular flange 41. Due to the enlarged diameter of the conical gear portion 21, the shaft 20 can not move upward relative to the box 30. A gasket 44 bears against the ball bearing 43. A retaining ring 45 is engaged on the shaft 20. A spring 46 is biased between the retaining ring 45 and the gasket 44 so that the shaft 20 is biased upward relative to the box 30 by the spring 46 and so that the shaft 20 can not move longitudinally relative to the box 30.

As shown in FIG. 3, a notch 31 is formed in a rear and outer end of the box 30, and a hole 32 is formed in the inner end of the notch 31. The width of the notch 31 is equal to the diameter of the rear axle 12 so that the rear axle 12 can be directly inserted through the notch 31 into the hole 32. A nut 47 is threadedly engaged on the rear axle 12. A sleeve nut 48 which has an outer diameter equal to the inner diameter of the hole 32 is inserted into the hole 32 and is threadedly engaged to the free end of the rear axle 12 so that the rear axle 12 can be stably retained in position. When the rear axle 12 is required to be removed from the box 30, it is only required to unthread the sleeve nut 48 from the rear axle 12 so that the rear axle 12 can be removed out of the box 30 through the notch 31.

A cone 24 is threaded to the right end of the hub 14 and is rotatable relative to the mobile cone 22. A ring element 50 which has an annular flange 51 formed therein is rotatably supported on the free end of the cone 24 by two ball bearings 53, 54. A rib 52 is formed on the outer peripheral surface of the ring element 50. As shown in FIG. 3, a first member 33 which is semi-circular is integrally fixed to the box 30 by such as welding. Two lugs 37 each with a screw hole are integrally formed on the first member 33. A groove 35 is formed in the inner peripheral surface of the first member 33. A second member 34 which is also semi-circular has a lug 370 formed on each end thereof. A hole 380 is formed in each lug 370. A groove 36 is formed in the inner peripheral surface of the second member 34. When the two members 33, 34 are provided around the ring element 50 and are fixed together by screws 39, the grooves 35 and 36 form an annular groove so as to receive the rib 52 of the ring element 50 so that the box 30 can be stably retained in place.

Accordingly, the direct transmission system has the following advantages: (1) The rear wheel axle of the bicycle can be stably fixed to the lower rear fork and can be easily removed without detaching the box provided for housing the direct transmission system. (2) The shaft of the bicycle can be stably supported to move rotationally only and can not move longitudinally. (3) The box 30 can be stably retained in place.

## Claims

1. A direct transmission system for a bicycle, said bicycle including a front axle (11) rotatably supported on a front end of a frame (10), and a rear axle (12) fixed on a rear end of said frame, a hub (14) being rotatably provided around said rear axle (12), a box (30) being provided on one end of said rear axle for housing said direct transmission system, a mobile cone (22) with a first conical gear portion (23) formed on one end thereof being rotatably provided around said rear axle for driving the hub, a cone (24) being coupled to one end of said hub (14) and rotatable relative to said mobile cone (22), a rear end of a shaft (20) extending into said box, a second conical gear portion (21) being formed on said rear end of said shaft for engagement with said first conical gear portion (23) of said mobile cone (22) so that said mobile cone can be driven by said shaft (20) to rotate via said engagement between said first and said second conical gear portions (23, 21), and a sleeve (40) force-fitted within said box, characterized in that an annular flange (41) is formed in an inner surface of said sleeve, a pair of ball bearings (42, 43) are provided on both sides of said annular flange (41), said second conical gear portion has a larger diameter than that of said shaft and one of said ball bearings (42) is rotatably received between said second conical gear portion and said annular flange so that said shaft (20) can not move toward said annular flange (41), a gasket (44) bears against the other ball bearing, a retaining ring (45) is engaged on said shaft, a spring (46) is biased between said retaining ring and said gasket so that said shaft is biased toward said annular flange and so that said shaft can not move longitudinally relative to said box, a notch (31) is formed in a rear and outer end of said box (30), a hole (32) is formed in an inner end of said notch (31), said rear axle (12) can be inserted through said notch into said hole, and a sleeve nut (48) is inserted into said hole and is threadedly engaged to a free end of said rear axle (12) so that said rear axle can be stably retained in position and can be easily detached.

2. A direct transmission system according to claim 1, wherein a ring (50) is rotatably supported on a free end of said cone (24), a rib (52) is formed on an outer peripheral surface of said ring, a first member (33) which is semi-circular is integrally fixed to said box (30), a second member (34) which is semi-circular can be fixed to said first member (33) for holding said ring (50), a groove (35, 36) is formed in an inner surface of each of said first member and said second member, when said first member and said second member are fixed together, said grooves (35, 36) form an annular groove so as to receive said rib of said ring so that said box (30) can be stably retained in place.

## Patentansprüche

1. Direktgetriebesystem für ein Fahrrad, wobei das Fahrrad eine auf einem Vorderende eines Rahmens (10) drehbar gehalterte Vorderachse (11) und eine auf einem hinteren Ende des Rahmens angebrachte Hinterachse (12), eine drehbar um die Hinterachse vorgesehene Nabe (14), einen auf einem Ende der Hinterachse zur Unterbringung des Direktgetriebesystems vorgesehenen Kasten (30), einen mit einem ersten Kegelradabschnitt (23) an seinem einen Ende um die Hinterachse drehbar gebildeten beweglichen Kegelteil (22) zum Antreiben der Nabe, einen mit einem Ende der Nabe (14) verbundenen und in bezug auf den beweglichen Kegelteil (22) drehbaren Kegelteil (24), wobei sich ein rückwärtiges Ende einer Welle (20) in den Kasten erstreckt, einen zweiten Kegelradabschnitt (21), der auf dem hinteren Ende der Welle für einen Eingriff mit dem ersten Kegelradteil (23) des beweglichen Kegelteils (22) gebildet ist, so daß der bewegliche Kegelteil durch die Welle (20) angetrieben werden kann, um sich über den Eingriff zwischen dem ersten und dem zweiten Kegelradteil (23, 21) zu drehen, und eine Hülse (40) im Kasten im Festsitz enthält, dadurch **gekennzeichnet,** daß in einer Innenseite der Hülse ein Ringflansch (41) gebildet ist, auf beiden Seiten des Ringflansches (41) ein Paar von Kugellagern (42, 43) vorgesehen ist, wobei der zweite Kegelradabschnitt einen größeren Durchmesser als derjenige der Welle aufweist und eines der Kugellager (42) zwischen dem zweiten Kegelradabschnitt und dem Ringflansch drehbar aufgenommen ist, so daß sich die Welle (20) nicht zu dem Ringflansch (41) hin bewegen kann, eine Dichtung (44) gegen das andere Kugellager anliegt, ein Haltering (45) sich in Eingriff auf der Welle befindet, eine Feder (46) zwischen dem Haltering und der Dichtung vorgespannt ist, derart, daß die Welle zu dem Ringflansch hin vorgespannt ist und so daß die Welle sich nicht in Längsrichtung in bezug auf den Kasten bewegen kann, in einem rückwärtigen und äußeren Ende des Kastens ein Schlitz gebildet ist, in einem Innenende des Schlitzes (31) ein Loch (32) gebildet ist, die Hinterachse (12) durch den Schlitz in das Loch eingeführt werden kann und eine Überwurfmutter (48) in das Loch eingeführt ist und sich mit Gewinde in Eingriff in einem freien Ende der Hinterachse (12) befindet derart, daß die Hinterachse in der Position stabil gehalten werden kann und leicht abgenommen werden kann.

2. Direktgetriebesystem nach Anspruch 1, bei dem ein Ring (50) drehbar auf einem freien Ende des Kegelteils (24) gehaltert ist, eine Rippe (52) auf einer Außenumfangsfläche des Rings gebildet ist, ein erstes Element (33), das halbkreisförmig ist, integral am Kasten (30) angebracht ist, ein zweites Element (34), das halbkreisförmig ist, am ersten Element (31) angebracht werden kann, um den Ring (50) zu halten, eine Nut (35, 36) in einer Innenfläche jedes des ersten Elements und des zweiten Elements gebildet ist, wenn das erste Element und das zweite Element zusammen angebracht sind, die Nuten (35, 36) eine Ringnut bilden, um die Rippe des Rings so aufzunehmen, daß der Kasten (30) am Platz stabil gehalten werden kann.

## Revendications

1. Système de transmission directe pour une bicyclette, ladite bicyclette comprenant un essieu avant (11) supporté de façon tournante sur l'extrémité avant d'un cadre (10) et un essieu arrière (12) fixé sur l'extrémité arrière dudit cadre, un moyeu (14) étant disposé de façon tournante autour dudit essieu arrière (12), une boîte (30) étant disposée sur une des extrémités dudit essieu arrière pour loger le système de transmission directe, un cône mobile (22) sur une des extrémités duquel est formée une première partie dentée conique (23) disposée de façon tournante autour dudit essieu arrière pour entraîner le moyeu, un cône (24) étant accouplé à l'une des extrémités dudit moyeu (14) et pouvant tourner par rapport au cône mobile (22), une extrémité arrière d'un arbre (20) s'étendant dans ladite boîte, une seconde partie dentée conique (21) étant formée sur l'extrémité arrière dudit arbre pour engréner avec la première partie dentée conique (23) du cône mobile (22) de sorte que le cône mobile peut être entraîné par ledit arbre (20) de manière à tourner par suite de l'engrènement précité entre lesdites première et seconde parties dentées coniques (23,21), et un manchon (40) monté à force dans ladite boîte, caractérisé en ce qu'un rebord ou saillie annulaire (41) est formé dans la surface intérieure dudit manchon, une paire de roulements à billes (42,43) sont disposés de part et d'autre de ladite saillie annulaire (41), ladite seconde partie dentée conique a un diamètre plus grand que celui dudit arbre et un (42) desdits roulements à billes est disposé de façon tournante entre la seconde partie dentée conique et ladite saillie annulaire de sorte que l'arbre (20) ne peut pas se déplacer vers ladite saillie annulaire (41), un joint d'étanchéité (44) porte contre l'autre roulement à billes, un anneau de retenue (45) est engagé sur ledit arbre, un ressort (46) est disposé, à l'état sous contrainte, entre ledit anneau de retenue et ledit joint d'étanchéité de sorte que ledit arbre est sollicité en direction de ladite saillie annulaire et de sorte que ledit arbre ne peut pas se déplacer longitudinalement par rapport à ladite boîte, une fente (31) est formée dans l'extrémité arrière et extérieure de la boîte (30), et un trou (32) est formé dans l'extrémité intérieure de ladite fente (31), ledit essieu arrière (12) étant inséré à travers ladite fente dans ledit trou, un manchon fileté (48) est inséré dans ledit trou et est vissé sur l'extrémité libre de l'essieu arrière (12) de sorte que l'essieu arrière peut être retenu en position de façon stable et peut être démonté facilement.

2. Système de transmission directe selon la revendication 1, dans lequel un élément annulaire (50) est supporté de façon tournante sur l'extrémité libre du cône (24), une nervure (52) est formée sur la surface périphérique extérieure dudit élément annulaire, un premier élément (33), qui est semi-circulaire, est fixé à demeure à ladite boîte (30), un second élément (34), qui est semi-circulaire, peut être fixé au premier élément (33) pour maintenir l'élément annulaire (50), une rainure (35,36) est formée dans la surface intérieure de chacun desdits premier et second éléments, lorsque ledit premier élément et ledit second élément sont fixés l'un à l'autre, lesdites rainures (35,36) forment une rainure circulaire destinée à loger ladite nervure de l'élément annulaire, de sorte que la boîte (30) peut être retenue en place de façon stable.
